# FASCICULE DE BREVET EUROPEEN

(11) **EP 3 194 167 B1**
(45) Date de publication et mention de la délivrance du brevet: **18.11.2020**
(21) Numéro de dépôt: 15770580.7
(22) Date de dépôt: 14.09.2015
(51) Int. Cl.: B32B 33/00, B29C 63/00, B29C 63/22

(54) **FILM ADHÉSIF MULTIFONCTIONNEL POUR LA PROTECTION DE SURFACE DE PIÈCES**
MULTIFUNKTIONALE KLEBEFOLIE ZUM OBERFLÄCHENSCHUTZ VON WERKSTÜCKEN
MULTIFUNCTIONAL ADHESIVE FILM FOR THE SURFACE PROTECTION OF WORKPIECES

(30) Priorité: 15.09.2014 FR 1458621
(43) Date de publication de la demande: 26.07.2017
(73) Titulaire: Airbus, 31700 Blagnac (FR); Adhetec, 65000 Tarbes (FR)
(72) Inventeur: CAMPAZZI, Elisa, 92150 Suresnes (FR); GUILLOU,Marie-Paule, 92150 Suresnes (FR); MOUYEN, Nicolas, 33270 Floirac (FR)
(74) Mandataire: Ney, Catherine
(86) Numéro de dépôt international: PCT/FR2015/052454
(87) Numéro de publication internationale: WO 2016/042245

(56) Documents cités:
- WO-A1-99/07515
- WO-A1-2006/055038
- DE-A1-102010 030 019
- US-A1- 2013 196 136
- Omnexus: "Hardness Shore D", , Retrieved from the Internet: URL:https://omnexus.specialchem.com/polyme r-properties/properties/hardness-shore-d [retrieved on 2018-06-19]

## Description

La présente invention s'inscrit dans le domaine de la protection de surface des pièces, en particulier des pièces susceptibles d'être soumises à des conditions érosives et dont il est souhaitable de maintenir le profil aérodynamique. Plus particulièrement, l'invention concerne un film adhésif de type multicouches permettant une telle protection, un procédé pour la protection de surface d'une pièce mettant en œuvre un tel film, ainsi qu'un kit pour la protection de la surface d'une pièce.

Un domaine d'application particulier de l'invention, qui sera décrit de manière détaillée dans la présente description, est la protection de la surface de pièces de structure d'aéronefs, ces aéronefs pouvant être de tout type, notamment des avions civils ou militaires, des hélicoptères civils ou militaires destinés à un usage en milieu terrestre ou maritime, des drones, etc. Un tel domaine d'application n'est cependant nullement limitatif de l'invention, qui s'applique également à tout autre domaine dans lequel il existe le besoin de maintenir le profil aérodynamique de pièces susceptibles d'être soumises à des conditions érosives au cours de leur fonctionnement, par exemple dans les domaines ferroviaire, automobile ou encore éolien, en particulier pour la protection des bords d'attaque des pales d'éolienne.

Dans le domaine aéronautique, certaines pièces de structure, plus particulièrement les pièces couramment appelées bords d'attaque, telles que les ailes, les dérives, les radômes d'avion, les stabilisateurs verticaux ou horizontaux, les pales de rotor d'hélicoptère, etc., sont soumises en vol à des conditions érosives pouvant être sévères, qui sont susceptibles d'en dégrader le profil aérodynamique car elles engendrent le développement de rugosités parasites qui s'opposent aux flux d'air et minimisent la zone d'écoulement laminaire, entrainant de ce fait notamment l'augmentation des dépenses en carburant. Il s'avère ainsi nécessaire de protéger la surface des pièces pour éviter une telle dégradation. Ces conditions érosives peuvent être de deux types : l'érosion par des particules solides, communément appelée érosion sable, et l'érosion par des particules liquides, communément appelée érosion pluie.

Les systèmes proposés par l'art antérieur pour protéger les bords d'attaque des aéronefs se divisent en deux types.

Le premier type se compose de revêtements inorganiques, par exemple formés à base de carbure de silicium, ou métalliques, par exemple les coiffes en titane ou en acier. De tels revêtements montrent une bonne résistance à l'érosion pluie, mais ils sont rapidement érodés par le sable. Ils constituent en outre des solutions dites permanentes, et les opérations pour leur remplacement en cas de dommage sont longues et contraignantes à mettre en œuvre.

Le deuxième type de revêtements consiste en des revêtements organiques de haute ductilité, par exemple à base de polyuréthane élastomère. Il a été proposé par l'art antérieur de mettre en œuvre des technologies de films adhésifs à base de tels polymères pour former des revêtements externes sur les pièces, visant à la protection de certaines zones contre des agressions liées à l'environnement, principalement l'exposition à des substances chimiques et corrosives, telles que le fuel, les fluides hydrauliques, l'eau, les sels, la pluie acide, etc. Afin de conserver leurs propriétés, ces revêtements doivent être résistants et durables face aux sollicitations auxquelles l'aéronef est susceptible d'être soumis lors de son utilisation, en particulier aux sollicitations mécaniques, aux cycles importants de température et d'humidité, au rayonnement ultraviolet, etc. A cet effet, la couche externe des revêtements proposés par l'art antérieur est formée en polyuréthane haute performance. Si de tels revêtements organiques de haute ductilité proposés par l'art antérieur présentent une bonne résistance à l'érosion sable, ils ne présentent cependant pas une résistance satisfaisante à l'érosion pluie. Leur durabilité est en outre peu satisfaisante : en particulier, lorsqu'un aéronef qui en est équipé traverse un orage, ces revêtements sont totalement détériorés en environ quinze minutes.

Il n'existe ainsi pas à l'heure actuelle de solution efficace combinant toutes les propriétés souhaitables pour le maintien du profil aérodynamique d'une pièce exposée à des conditions érosives sévères, en particulier une bonne tenue la fois à l'érosion pluie et à l'érosion sable.

Le document US 2013/196136 décrit une couche adhésive à laquelle est superposée une couche résistante à la propagation de flamme.

Le document DE 10 2010 030019 divulgue un ruban adhésif pour la fixation de pièces en matériau plastique sur le corps d'un véhicule automobile.

Le document WO 99/07515 décrit des coussins de polissage, de topographie de surface particulière, destinés notamment à la fabrication de dispositifs semi-conducteurs. La présente invention vise à remédier aux inconvénients des solutions proposées par l'art antérieur pour la protection de surface des pièces, en particulier des bords d'attaques d'aéronefs, notamment à ceux exposés ci-avant, en proposant un système qui permette de protéger efficacement la pièce à la fois contre les agressions par des particules liquides et contre les agressions par des particules solides, y compris dans les cas d'exposition sévère, tout en générant un impact massique réduit.

Des objectifs supplémentaires de l'invention sont que ce système présente un coût réduit, qu'il soit facile et rapide à mettre en œuvre, en particulier à poser et déposer, et qu'il présente une bonne résistance aux sollicitations mécaniques et environnementales auxquelles est susceptible d'être soumise la pièce, en particulier à l'encrassement et au vieillissement UV.

Un autre objectif de l'invention est de permettre une protection ciblée des pièces, optimisées en fonction du type de sollicitations auxquelles les différentes zones de la pièce sont susceptibles d'être principalement exposées.

A cet effet, il est proposé selon la présente invention une pièce d'aéronef comprenant un film thermoformable multicouches pour la protection de la surface de ladite pièce selon la revendication 1.

Un tel film, assurant les deux fonctions de résistance à l'érosion par des particules solides et de résistance à l'érosion par des particules liquides, permet avantageusement de protéger à lui seul la pièce contre ces deux types d'érosion. Une telle protection n'est de ce fait associée qu'à un faible impact massique, et à des cycles réduits de production de la pièce. En particulier, le film selon l'invention présente de préférence un impact massique inférieur ou égal à 590 g/m².

S'agissant d'un film à propriétés adhésives, il est en outre facile et rapide à poser, qui plus est dans tous types d'environnements, notamment dans les lieux usuels de production mais également dans des environnements difficiles, tels que dans un hangar, ou en plein air.

Selon l'invention, la couche en matériau(x) polymère(s) résistante à l'érosion par des particules solides et à l'érosion par des particules liquides est formée en un seul matériau polymère, présentant à la fois une fonction de résistance à l'érosion par des particules solides et une fonction de résistance à l'érosion par des particules liquides. Un tel mode de réalisation présente notamment l'avantage d'un procédé de production du film simplifié.

La couche en matériau(x) polymère(s) résistante à l'érosion par des particules solides et à l'érosion par des particules liquides est formée, au moins partiellement, et en particulier entièrement, en un matériau polymère choisi parmi un polyuréthane thermoplastique (TPU), une polyétheréthercétone (PEEK) et un polyéthylène à poids moléculaire très élevé (PE-UHMW), de dureté Shore D comprise entre 50 et 65 D.

Ces matériaux polymères sont connus en eux-mêmes, et ils présentent un bon comportement en frottement et une grande résistance à l'usure, ainsi qu'une bonne résistance chimique et une bonne résistance en température dans la gamme de températures à laquelle sont soumis les aéronefs en opération, c'est-à-dire entre environ -60 °C et 80 °C.

Il a en outre été découvert par les présents inventeurs que, de manière surprenante, une couche formée en un matériau polymère choisi parmi un polyuréthane thermoplastique (TPU), une polyétheréthercétone (PEEK) et un polyéthylène à poids moléculaire très élevé (PE-UHMW), et dont la dureté Shore D est comprise entre 50 et 65 D, présente à elle seule des performances particulièrement élevées en terme de résistance à l'érosion tant par des particules solides que par des particules liquides.

Le film selon l'invention peut comporter une seule couche en matériau polymère résistante à l'érosion par des particules solides et à l'érosion par des particules liquides, ou une pluralité de telles couches. Dans cette configuration, au moins une de ces couches, et de préférence plusieurs de ces couches, voire leur totalité, sont formées en un matériau polymère choisi parmi un polyuréthane thermoplastique (TPU), une polyétheréthercétone (PEEK) et un polyéthylène à poids moléculaire très élevé (PE-UHMW), de dureté Shore D comprise entre 50 et 65 D. Ces différentes couches en matériau polymère résistantes à l'érosion par des particules solides et à l'érosion par des particules liquides peuvent être disposées les unes par rapport aux autres, sur la sous-couche adhésive, selon toute configuration possible, par exemple juxtaposées les unes aux autres, et/ou empilées les unes sur les autres de sorte à se recouvrir au moins partiellement.

Dans un mode de réalisation particulièrement avantageux de l'invention, en termes de performance de résistance combinée à l'érosion par des particules solides et à l'érosion par des particules liquides, la couche en matériau polymère résistante à l'érosion par des particules solides et à l'érosion par des particules liquides est formée en polyétheréthercétone de dureté Shore D comprise entre 50 et 65 D.

Dans des variantes de l'invention, la couche en matériau(x) polymère(s) résistante à l'érosion par des particules solides et à l'érosion par des particules liquides est formée par superposition et/ou juxtaposition, sur la sous-couche adhésive, d'une pluralité de portions de couche, dont au moins une portion de couche formée en un premier matériau polymère résistante à l'érosion par des particules solides, et au moins une portion de couche formée en un deuxième matériau polymère résistante à l'érosion par des particules liquides. En particulier, la portion de couche formée en le premier matériau polymère est plus résistante à l'érosion par des particules solides que la portion de couche formée en le deuxième matériau polymère, et la portion de couche formée en le deuxième matériau polymère est plus résistante à l'érosion par des particules liquides que la portion de couche formée en le premier matériau polymère.

Les différentes portions de couche sont alors préférentiellement disposées les unes par rapport aux autres en fonction des besoins spécifiques de la pièce particulière dont la surface doit être protégée, de telle sorte que chaque zone de cette pièce susceptible d'être exposée plus particulièrement à des agressions de particules solides, notamment les zones d'incidence à faible angle, puisse être recouverte par une première portion de couche résistante à l'érosion par des particules solides, en même temps que chaque zone de la pièce susceptible d'être exposée plus particulièrement à des agressions de particules liquides, notamment les zones d'incidence normale, puisse être recouverte par une deuxième portion de couche résistante à l'érosion par des particules liquides.

Ainsi, selon la présente invention, le film est avantageusement configuré de sorte à présenter des propriétés locales spécifiques répondant aux besoins de zones localisées de la pièce à protéger.

De manière plus générale, le ou les matériau(x) polymère(s) entrant dans la constitution de la couche résistante à l'érosion pluie et à l'érosion sable sont choisis pour présenter une bonne résistance chimique, thermique et aux rayonnements ultraviolet, infrarouge et visible, une bonne résistance aux chocs thermiques, ainsi qu'une bonne adhérence, de sorte à assurer une bonne cohésion de la liaison au niveau de l'interface avec la sous-couche adhésive, en liaison avec les caractéristiques d'adhérence du matériau choisi pour constituer cette sous-couche adhésive, et de l'interface entre différentes portions de couches entre elles le cas échéant.

En particulier, les sollicitations mécaniques sont principalement les impacts avec les particules solides et liquides (érosion) et le flux d'air pouvant provoquer un pelage ou un délaminage du film adhésif. Afin de résister à ces contraintes, les matériaux choisis pour entrer dans la constitution du film selon l'invention sont avantageusement choisis pour leur grande cohésion, leur dureté comprise entre 50 et 65 shore D et la forte capacité de cohésion avec la sous-couche adhésive.

Le cas échéant, la couche de résistance à l'érosion conforme à l'invention peut être soumise à un traitement de surface permettant d'optimiser l'adhérence du film sur la sous-couche adhésive avec laquelle elle est complexée.

Selon des modes de réalisation particuliers, l'invention répond en outre aux caractéristiques suivantes, mises en œuvre séparément ou en chacune de leurs combinaisons techniquement opérantes.

Dans des modes de réalisation particuliers de l'invention, la couche en matériau(x) polymère(s) résistante à l'érosion par des particules solides et à l'érosion par des particules liquides présente une épaisseur comprise entre 50 et 500 µm, de préférence entre 100 et 300 µm, et préférentiellement égale à 200 µm.

L'épaisseur totale du film selon l'invention est en outre préférentiellement inférieure à 460 µm, de sorte notamment à assurer sa compatibilité avec les contraintes de transparence à la détection par radar.

Dans des modes de réalisation particuliers de l'invention, la couche en matériau(x) polymère(s) résistante à l'érosion par des particules solides et à l'érosion par des particules liquides est fonctionnalisée en surface, sur une partie ou sur la totalité de cette surface, de sorte à lui conférer une résistance à l'érosion plus importante, ou une fonctionnalité supplémentaire de protection de la surface de la pièce. La localisation de la ou des zone(s) ainsi fonctionnalisée(s) est notamment choisie en fonction de la pièce à protéger, et du degré d'exposition de chacune des zones de cette pièce à chaque contrainte environnementale lors de son utilisation, de sorte à assurer une protection localisée ciblée optimale. La fonctionnalisation peut être réalisée selon toute méthode connue de l'homme du métier en vue de l'obtention de l'effet particulier souhaité.

La couche en matériau(x) polymère(s) résistante à l'érosion par des particules solides et à l'érosion par des particules liquides peut notamment être soumise à métallisation ou céramisation de surface. Elle peut également être fonctionnalisée de sorte à obtenir un effet antigivre et/ou de résistance à l'encrassement, par exemple par projection d'un revêtement antigivre et/ou antisalissure. La fonctionnalisation de surface peut en outre consister en une structuration de surface de sorte à minimiser la trainée de frottement et favoriser l'entrée d'air, par exemple en une texturation de surface pour former des motifs en dents de scie, notamment par micro-structuration par lithographie ou par micro-thermoformage, ou micro-structuration par laser.

Dans le même objectif que s'est fixé la présente invention de conférer au film adhésif des propriétés supplémentaires, répondant aux besoins de protection de la pièce, ou de zones particulières de cette dernière, le film selon l'invention peut également comporter des couches supplémentaires, qui sont juxtaposées et/ou superposées, sur la sous-couche adhésive qui supporte l'ensemble, à la couche en matériau(x) polymère(s) résistante à l'érosion par des particules solides et à l'érosion par des particules liquides.

Ainsi, dans des modes de réalisation particuliers de l'invention, le film comporte au moins une couche fonctionnelle en matériau polymère présentant une fonction antigivre, c'est-à-dire la capacité de réduire la formation et l'adhésion de la glace, et/ou une fonction de résistance à l'encrassement, c'est-à-dire facilitant le nettoyage et/ou présentant une faible attitude à l'encrassement. Chacune de telles couches fonctionnelles est superposée et/ou juxtaposée, sur la sous-couche adhésive, à la couche en matériau(x) polymère(s) résistante à l'érosion par des particules solides et à l'érosion par des particules liquides.

De telles fonctions supplémentaires permettent avantageusement d'éviter la perte de performance due à l'accumulation de glace sur la pièce et d'améliorer ainsi la sécurité d'opération de cette dernière, ainsi que de limiter l'encrassement de la pièce et sa perte d'efficacité résultante.

Une telle couche fonctionnelle supplémentaire peut être constituée de toute manière classique en elle-même. De manière générale, les principes de base mis en œuvre pour le développement de surfaces glaciophobes et anti-salissures passives sont essentiellement les mêmes : il s'agit de coupler une chimie donnant une faible énergie de surface et une superhydrophobicité à une rugosité optimale. Ainsi, la couche fonctionnelle peut être basée sur la technologie dite de l'effet autonettoyant Lotus, inspiré de la plante, qui requiert une double rugosité aux niveaux micrométrique et nanométrique, comme décrit dans la publication de Dodiuk et al., Polymers for Advanced Technology, 2007, 18: 746-750 ; sur les solutions glaciophobes par superhydrophobicité développées par l'art antérieur, tel qu'illustré par le document de brevet WO 2008/048201 ; ou encore sur la solution exposée dans le document FR 2 954 340, décrivant une composition pour revêtement de surface à base d'oligomères uréthane-acrylate, d'un diluant et de silice pyrogénée, qui permet d'obtenir après polymérisation un revêtement dont les propriétés de surface induisent des effets autonettoyants et antigivre.

L'adjonction au film adhésif selon l'invention d'une fonctionnalité antigivre s'avère en particulier tout à fait avantageuse par rapport aux solutions antigivre proposées à l'heure actuelle, qui prévoient la mise en œuvre soit de produits dégivrants temporaires, sous forme à pulvériser avant décollage, qui présentent les inconvénients de devoir être projetés à chaque vol, et d'engendrer une pollution importante ; soit de produits dégivrants long terme, sous forme d'un gel à pulvériser, qui présentent les inconvénients de nécessiter une première application d'un primaire puis une pulvérisation du produit, le tout en zone contrôlée en température et propre ; soit de systèmes actifs de nettoyage et dégivrage par apport de chaleur, présentant l'inconvénient d'un surpoids important. Le film selon l'invention remédie à tous ces inconvénients, puisqu'il permet notamment d'obtenir un effet antigivre facilement et durablement, avec un impact massique réduit.

Dans des modes de réalisation particuliers de l'invention, le film comporte au moins une couche en matériau polymère présentant une structuration de surface limitant la trainée de frottement dans l'air, superposée et/ou juxtaposée, sur la sous-couche adhésive, à la couche en matériau(x) polymère(s) résistante à l'érosion par des particules solides et à l'érosion par des particules liquides. Une telle couche permet avantageusement de réaliser des économies de carburant.

Le film adhésif selon l'invention peut ainsi être formé d'un assemblage de différentes couches constitutives, présentant chacune des fonctions différentes de protection de la surface de la pièce, et toutes supportées par la sous-couche adhésive. Ces différentes couches constitutives peuvent être juxtaposées et/ou superposées les unes aux autres sur cette sous-couche adhésive.

Dans des modes de réalisation particuliers de l'invention, les différentes couches constitutives du film qui sont juxtaposées et/ou superposées les unes aux autres sont assemblées les unes aux autres par adhésif, thermosoudées ou coextrudées.

En particulier, pour un complexage des couches par empilement, dit complexage vertical, l'assemblage des couches superposées les unes aux autres peut être réalisé par adhésivage, au moyen d'adhésifs spécifiques compatibles avec les matériaux polymères formant les couches. Un tel mode de complexage permet d'assurer une bonne cohésion de l'empilement, il est facile de mise en œuvre et il permet le complexage d'un grand nombre de matériaux. Autrement, le complexage vertical peut être réalisé par coextrusion, particulièrement adaptée lorsque les matériaux polymères présentent des propriétés thermiques comparables.

Pour un complexage des couches par juxtaposition, dit complexage horizontal, l'assemblage des couches juxtaposées les unes aux autres peut être réalisé par adhésivage, notamment au moyen d'une ligne de complexage industrielle, ou par thermo-soudage, cette dernière technique permettant notamment d'assurer une cohésion importante des couches et de minimiser les effets de bord.

Dans le cas d'un complexage horizontal, les différentes couches juxtaposées les unes aux autres sont en outre de préférence disposées de sorte à se chevaucher les unes les autres, de manière à protéger l'adhésif d'une agression extérieure, notamment chimique, et à éviter tout espace vide entre les couches qui pourrait provenir soit d'une dérive lors du complexage, soit d'une variation dimensionnelle des matériaux exposés à des contraintes extérieures telles que de température, rayonnement ultraviolet, humidité, etc.

Le complexage peut également être mixte, c'est-à-dire que le film peut comporter à la fois des couches empilées les unes sur les autres, et des couches juxtaposées les unes aux autres.

Dans des modes de réalisation particuliers de l'invention, la sous-couche adhésive est constituée d'un matériau adhésif du type sensible à la pression, notamment choisi parmi les matériaux des familles acryliques, caoutchouc et silicone. Ce matériau adhésif présente de préférence une forte capacité d'adhérence aux matériaux couramment mis en œuvre pour habiller les structures d'aéronefs, notamment aux primaires de collage, à la peinture et aux métaux tels que l'aluminium, l'acier et le titane, ainsi qu'une forte adhésivité à la couche résistante à l'érosion.

Un tel mode de réalisation de la sous-couche adhésive permet avantageusement que tant la pose du film sur la surface de la pièce à protéger que sa dépose soient faciles et rapides à réaliser. Le film selon l'invention est ainsi facilement remplaçable, si bien qu'il constitue une solution durable pour la protection de surface des pièces. Il permet notamment une réduction des cycles de maintenance et des temps d'immobilisation de l'aéronef nécessaires à cet effet. Le remplacement du film selon l'invention peut en outre être mis en œuvre en n'importe quel lieu, y compris dans des environnements difficiles et contraignants, tels que dans des hangars sommaires, en plein air, etc.

La sous-couche adhésive est préférentiellement continue. Son épaisseur peut notamment être comprise entre 25 et 100 µm.

Selon un autre aspect, la présente invention concerne un procédé pour la protection de surface d'une pièce, notamment la surface extérieure d'une pièce d'aéronef, qui comprend les étapes de :
- thermoformage d'un film adhésif selon la présente invention, répondant à l'une ou plusieurs des caractéristiques ci-avant, selon une forme apte à épouser la forme d'au moins une partie de la pièce,
- et application du film ainsi mis en forme sur la surface de ladite partie de la pièce.

Préférentiellement, le procédé comprend une étape préalable de détermination de la configuration du film, c'est-à-dire du nombre, de la fonctionnalité et de la localisation, sur la sous-couche adhésive, des différentes couches fonctionnelles qui le constituent, en fonction des besoins spécifiques de la pièce particulière à protéger et des contraintes auxquelles les différentes zones de cette pièce sont destinées à être soumises en opération, de sorte à assurer une protection optimale de chacune de ces zones au moyen du film selon l'invention.

Le film selon l'invention fabriqué selon une telle configuration spécifique assure de ce fait avantageusement une protection ciblée de chaque zone de la pièce contre l'érosion par des particules solides et/ou par des particules liquide, ainsi que, le cas échéant, le givre et l'encrassement.

Ces différents films peuvent présenter la même configuration, ou des configurations différentes.

Chacun de ces films est préférentiellement configuré pour assurer une protection ciblée de la zone de la pièce sur laquelle il est destiné à être appliqué, et à la forme de laquelle il est adapté, en fonction des contraintes environnementales auxquelles cette zone sera exposée en vol.

Les caractéristiques et avantages de l'invention apparaitront plus clairement à la lumière des exemples de réalisation ci-après, fournis à simple titre illustratif et nullement limitatifs de l'invention, avec l'appui des figures 1a à 5b, dans lesquelles :
- la figure 1a représente de manière schématique un film selon un premier mode de réalisation de l'invention ;
- la figure 1b représente de manière schématique un film selon un deuxième mode de réalisation de l'invention ;
- la figure 2a représente de manière schématique un film selon un troisième mode de réalisation de l'invention ;
- la figure 2b représente de manière schématique un film selon un quatrième mode de réalisation de l'invention ;
- la figure 3a représente de manière schématique un film selon un cinquième mode de réalisation de l'invention, appliqué sur un bord d'attaque d'aéronef ;
- les figures 4a et 4b montrent des pièces recouvertes d'un film adhésif, respectivement d'un film à base de polyuréthane de l'art antérieur (figure 4a) et d'un film à base de PEEK conforme à l'invention (figure 4b), à l'issue d'un test d'érosion pluie P-JET, chaque ligne correspondant au nombre d'impacts par des particules liquides indiqué en vis-à-vis ;
- et les figures 5a et 5b montrent des pièces recouvertes d'un film adhésif, respectivement d'un film à base de polyuréthane conforme à l'invention (figure 5a) et d'un film à base de polyuréthane de dureté moindre (figure 5b), à l'issue d'un test d'érosion sable pour 200g de particules projetées.

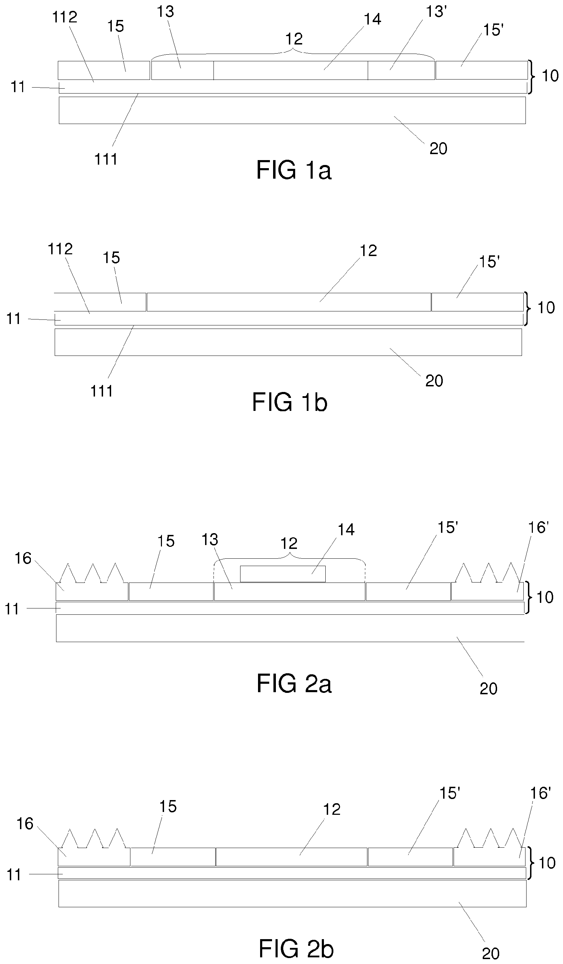

Un premier exemple d'un film 10 selon l'invention, dans lequel les différentes couches constitutives sont juxtaposées (« complexage horizontal »), et de conformation plane, est montré sur la figure 1a. Sur cette figure, comme sur les suivantes, pour des raisons de clarté, les différents éléments sont représentés légèrement espacés les uns des autres, bien qu'étant en réalité étroitement appliqués les uns contre les autres. De même, les dimensions relatives des différents éléments constitutifs du film ne sont nullement représentatives de la réalité.

Le film 10 est appliqué sur une pièce 20, qui peut notamment être une pièce de structure d'aéronef susceptible d'être soumise en opération à des conditions fortement érosives, telle qu'un bord d'attaque.

Le film 10 comporte une sous-couche adhésive 11, formée en un matériau adhésif du type sensible à la pression, tel que de la famille acrylique ou caoutchouc ou silicone. Cette sous-couche adhésive est continue et elle présente une épaisseur comprise entre 25 et 100 µm. Elle comporte une première face 111, appliquée contre la surface de la pièce 20, et une deuxième face opposée 112, sur laquelle sont fixées les différentes couches fonctionnelles constitutives du film 10.

Le film 10 comporte une couche 12 en matériau(x) polymère(s) résistante à l'érosion par des particules solides et à l'érosion par des particules liquides. Cette couche 12 dite de résistance à l'érosion est formée de trois portions de couche : deux portions de couche d'extrémité 13, 13' formées en un premier matériau polymère et résistantes à l'érosion par des particules solides, et une portion de couche centrale 14 formée en un deuxième matériau polymère et résistante à l'érosion par des particules liquides.

Le premier matériau polymère et le deuxième matériau polymère sont notamment choisis parmi les matériaux suivants : TPU, PEEK et PE-UHMW.

Le film comporte également deux couches fonctionnelles antigivre 15, 15', qui sont juxtaposées sur la sous-couche adhésive 11 à la couche de résistance à l'érosion 12, de part et d'autre de cette dernière. Ces couches antigivre 15, 15' sont constituées en matériau polymère.

Toute solution connue de l'homme du métier peut être mise en œuvre pour constituer les couches antigivre du film selon l'invention. A titre d'exemples, ces couches peuvent comporter :
- un revêtement contenant de 25 à 29 % d'atomes de silicium, 22 à 45 % d'atomes d'oxygène et de 26 à 49 % d'atomes de carbone, par rapport au % atomique total du revêtement, ce revêtement présentant une structuration, en particulier sous la forme d'un motif de points ou de lignes ;
- un revêtement obtenu par polymérisation au plasma de l'hexaméthyldisiloxane (HMDSO) ;
- ou un revêtement contenant de 15 à 75% en atomes de fluor et de 25 à 85% atomiques d'autres composants, par rapport au % atomique total du revêtement, ce revêtement présentant une structuration, en particulier sous la forme d'un motif de points ou de lignes.

Dans des variantes de l'invention, illustrées sur la figure 1b, le film 10 présente les mêmes caractéristiques que celles décrites ci-avant, à l'exception de la couche 12 de résistance à l'érosion, qui est dans ce cas formée en un seul bloc d'un seul matériau polymère lui conférant une bonne résistance tant à l'érosion sable qu'à l'érosion pluie. Ce matériau polymère est choisi parmi les matériaux suivants : TPU, PEEK et PE-UHMW, de dureté Shore D comprise entre 50 et 65 D.

Un troisième exemple d'un film 10 selon l'invention, dans lequel les différentes couches constitutives sont juxtaposées ou superposées les unes aux autres (« complexage mixte »), et de conformation plane, est montré sur la figure 2a.

Le film 10 est appliqué sur une pièce 20, par sa sous-couche adhésive 11.

Il comporte une couche 12 en matériau(x) polymère(s) résistante à l'érosion par des particules solides et à l'érosion par des particules liquides. Cette couche 12 de résistance à l'érosion est formée de deux portions de couche qui sont superposées l'une sur l'autre sur la sous-couche adhésive 11 : une portion de couche inférieure 13 formée en un premier matériau polymère et résistante à l'érosion par des particules solides, et une portion de couche supérieure 14 formée en un deuxième matériau polymère et résistante à l'érosion par des particules liquides.

Le film comporte également deux couches fonctionnelles antigivre en matériau polymère 15, 15', qui sont juxtaposées sur la sous-couche adhésive 11 à la couche de résistance à l'érosion 12, de part et d'autre de cette dernière.

Il comporte en outre deux couches fonctionnelles en matériau polymère 16, 16' limitant la trainée de frottement dans l'air, qui sont juxtaposées aux couches fonctionnelles antigivre 15, 15', de part et d'autre de ces dernières. Ces couches dites de réduction de la trainée présentent une texturation de surface en dents de scie.

Un autre exemple de film 10 selon l'invention, représenté sur la figure 2b, est identique au film décrit ci-avant en référence à la figure 2a, à l'exception de la couche résistante à l'érosion 12, qui est formée en un seul matériau polymère présentant une performance élevée en terme de résistance à l'érosion tant par des particules liquides que par des particules solides, choisi parmi les matériaux de type PU, PEEK et PE-UHMW, de dureté Shore D comprise entre 50 et 65 D.

Les films 10 montrés sur les figures 1a, 1b, 2a et 2b présentent tous une masse surfacique inférieure ou égale à 590 g/m². Ils sont faciles à poser et déposer, et ils permettent de protéger efficacement la pièce, de manière localisée, à la fois contre les agressions par des particules liquides et contre les agressions par des particules solides, y compris dans les cas d'exposition sévère.

De manière générale, la configuration exacte du film 10 est choisie pour être adaptée aux besoins en protection des différentes zones de la pièce, de sorte à en assurer une protection optimale.

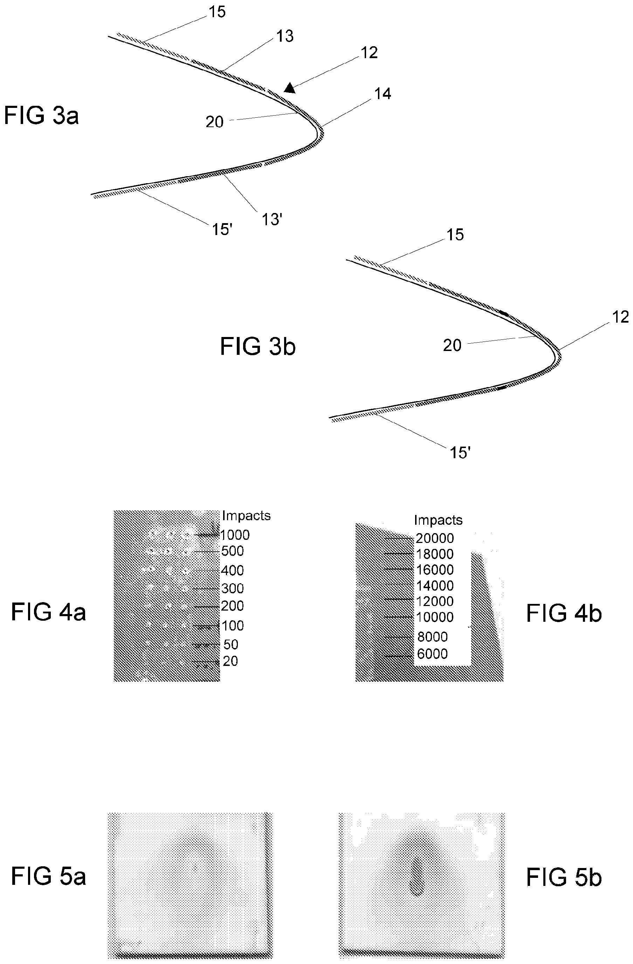

A titre d'exemple, des configurations particulières de films 10 adaptées à la protection d'un bord d'attaque 20 d'un aéronef, sont montrées sur la figure 3a. Sur ces figures, les différentes couches et portions de couche sont représentées légèrement espacées les unes des autres pour des raisons de clarté. Une telle configuration n'est cependant nullement limitative de l'invention, les différentes couches et portions de couches juxtaposées les unes aux autres étant au contraire préférentiellement étroitement appliquées les unes contre les autres.

Dans le mode de réalisation illustré sur la figure 3a, le film 10 comporte une couche de résistance à l'érosion 12 formée de deux portions de couche 13, 13' en un premier matériau polymère[0] résistantes à l'érosion par des particules solides, dites portions de couche résistantes à l'érosion sable, qui sont juxtaposées de part et d'autre d'une portion de couche centrale 14 formée en un deuxième matériau polymère et résistante à l'érosion par des particules liquides, dite portion de couche résistante à l'érosion pluie. Il comporte en outre deux couches d'extrémité fonctionnelles antigivre 15, 15', qui sont disposées de part et d'autre de la couche de résistance à l'érosion 12.

Plus particulièrement, le film 10 est disposé sur la pièce 20 de telle sorte que la portion de couche résistante à l'érosion pluie 14 se trouve disposée au niveau de la zone d'incidence normale de la pièce, et les portions de couche résistantes à l'érosion sable 13, 13' et les couches antigivre 15, 15' se trouvent disposées au niveau de zones d'incidence à faible angle, assurant ainsi une protection ciblée optimale de la pièce vis-à-vis des contraintes auxquelles elle sera exposée en vol.

Dans le mode de réalisation illustré sur la figure 3b, le film 10 est identique au film décrit ci-avant en référence à la figure 3a, à l'exception de la couche résistante à l'érosion 12, qui est formée en un seul matériau polymère présentant une performance élevée en terme de résistance à l'érosion tant par des particules liquides que par des particules solides, choisi parmi les matériaux de type PU, PEEK et PE-UHMW, de dureté Shore D comprise entre 50 et 65 D. Cette couche s'étend sur la zone d'incidence normale et les zones d'incidence à faible angle contigües de la pièce 20 d'aéronef.

### Tests de résistance à l'érosion

Des pièces recouvertes de films conformes à la présente invention ont été soumises à des tests visant à évaluer leur résistance à l'érosion par des particules liquides (érosion pluie) et à l'érosion par des particules solides (érosion sable).

### A/ Expérience 1

Des films selon l'invention comportant une sous-couche adhésive acrylique et une couche résistante à l'érosion sont déposés sur une plaque acier SAE 1008 ou sur une plaque peinte (substrat en aluminium 2024 plaqué, anodisé et peint avec une couche de primaire époxy, d'épaisseur comprise entre 15 et 25 µm, et finition par une couche polyuréthane, d'épaisseur comprise entre 50 et 130 µm), puis soumis au test au nettoyeur haute pression, selon le protocole décrit ci-après.

Les couches résistantes à l'érosion des différents films adhésifs testés sont constituées comme suit : polyuréthane thermoplastique grande dureté (TPU) (55 à 60 Shore D) (Film F1), PEEK (65 Shore D) (Film F2), PE-UHMW (50 Shore D) (Film F3).

A titre d'exemple comparatif, est également soumise au test une plaque recouverte d'un film adhésif comportant une couche de polyuréthane thermoplastique proposée par l'art antérieur, de dureté Shore D 35, inférieure à celle préconisée par la présente invention (Film F0).

### A.1/ Résistance à l'érosion pluie

La durée du test est de 60 s. Le but est d'évaluer la résistance des films adhésifs sélectionnés à un jet d'eau sous pression afin de simuler un environnement de type « pluie » à haute vitesse. L'appareil permettant de projeter l'eau est un nettoyeur à buse de projection d'eau de type karcher. Il s'agit donc d'un impact d'un jet continu et non de gouttes d'eau. Ce test simule donc de manière approchante le phénomène d'érosion rencontré par un bord d'attaque de pale d'hélicoptère ou d'aile d'avion en environnement pluie.

Les conditions opératoires sont les suivantes.
Pression : 150 bars
Distance buse/pièce : 4,7 cm
Angle d'Impact sur la pièce : 90 degrés
Débit d'eau : 9 L/min

Pour les plaques acier, la distance buse/substrat est constante. C'est le temps nécessaire à la perforation du film adhésif qui est relevé. Le test est arrêté après 60 s d'exposition si le film ne subit pas de perforation.

Pour les plaques peintes, le temps de test est constant (10 s). C'est la distance buse/pièce nécessaire à la perforation qui est relevée.

Les résultats obtenus sont indiqués dans le tableau 1 ci-après.

**Tableau 1 - Résultats du test d'érosion pluie au nettoyeur haute pression, où : Na = non altéré ; ✔ = Film non perforé, non endommagé après 10 s ; X = Film perforé après un temps de test inférieur ou égal à 10 s**

| Paramètre mesuré | Temps avant 1^{ères} altérations | Distance buse/pièce | | | | | | |
|---|---|---|---|---|---|---|---|---|
| Substrat | Plaque acier | Plaque peinte | | | | | | |
| Distance buse/pièce (cm) | 4 | 4 | 6 | 10 | 20 | 30 | 40 | 50 |
| Film F0 | < 1 s | x | x | x | x | x | x | ✔ |
| Film F1 | Na | x | x | ✔ | ✔ | ✔ | ✔ | ✔ |
| Film F2 | Na | ✔ | ✔ | ✔ | ✔ | ✔ | ✔ | ✔ |
| Film F3 | Na | ✔ | ✔ | ✔ | ✔ | ✔ | ✔ | ✔ |

Ces résultats démontrent que les films conformes à l'invention présentent tous un comportement bien supérieur, en termes de résistance à l'érosion pluie, que le film F0 proposé par l'art antérieur.

### A.2/ Résistance à l'érosion sable

Le but est d'évaluer la résistance des films à un jet de sable sous pression afin de simuler un environnement de type « air+sable » à haute vitesse. L'appareil permettant de projeter ce jet de sable est une sableuse de type industriel.

Pour ce test, la pièce utilisée est une plaque acier SAE 1008. Une telle plaque peinte, sans film, est également soumise au test (Témoin).

Les conditions opératoires sont les suivantes :
Pression : 1,4 bar
Distance buse/pièce : 4,7 cm
Angle d'impact : 90 degrés
Sable : oxyde d'aluminium (diamètre 200 µm)
Débit : (10 +/- 3) g/s

Les résultats obtenus sont indiqués dans le tableau 2 ci-après.

**Tableau 2 - Résultats du test d'érosion sable**

| | Temps avant 1^{ères} altérations | Commentaires |
|---|---|---|
| Témoin | 5 à 10 s | - |
| Film F0 | > 3 h | Brunissement |
| Film F1 | 1 à 2 h | Fissuration |
| Film F2 | 3 à 6 min | Fissuration |
| Film F3 | 1 à 2 h | Fissuration |

Ces résultats montrent que les films conformes à l'invention F1 (TPU grande dureté) et F3 (PE-UHMW) offrent un comportement en termes de résistance à l'érosion sable qui est comparable à la solution de l'art antérieur F0. Ils montrent aussi la grande résistance du film F2 (PEEK) par rapport à une peinture aéronautique nue.

Au global, en termes de protection combinée contre l'érosion pluie et l'érosion sable, les films conformes à la présente invention se révèlent bien plus efficaces que les films à base de polyuréthane basse dureté de l'art antérieur.

### B/ Expérience 2

Pour cette expérience, les films adhésifs ont été testés sur une pièce de configuration simplifiée représentative d'une pièce de structure d'avion, comportant, sur une plaque d'aluminium 2024 préalablement soumise à décapage, une couche de primaire époxy (d'épaisseur entre 15 et 25 µm) et une couche de finition polyuréthane (« top coat », d'épaisseur entre 50 et 100 µm).

Les films testés comportent une sous-couche adhésive acrylique d'épaisseur 50 µm, et une couche résistante à l'érosion d'épaisseur comprise entre 100 et 250 µm, de constitution suivante : polyuréthane thermoplastique grande dureté (polyuréthane aliphatique d'épaisseur 200 µm) de dureté Shore D 40 à 50 (bornes exclues) (Film F4, exemple comparatif) ; polyuréthane thermoplastique grande dureté (polyuréthane aliphatique d'épaisseur 250 µm) de dureté Shore D 50 à 60 (Film F5) ; polyuréthane thermoplastique grande dureté (polyuréthane aliphatique d'épaisseur 250 µm) de dureté Shore D 50 à 60 (avec promoteur d'adhérence, Film F5') ; PEEK semi-cristallin (d'épaisseur 100 µm) de dureté Shore D 65 (Film F6) ; PEEK semi-cristallin (d'épaisseur 100 µm) de dureté Shore D 65 (avec promoteur d'adhérence, Film F6').

A titre d'exemple comparatif, il a également été testé le film F0 décrit ci-avant dans l'Expérience 1, proposé par l'art antérieur.

### B.1/ Résistance à l'érosion pluie

Le protocole de test est conforme à celui décrit dans le document WO 2009/074514 (technique couramment connue sous le nom P-JET). Les paramètres opératoires appliqués et les résultats obtenus sont indiqués dans le tableau 3 ci-après.

**Tableau 3 - Résultats du test d'érosion pluie**

| Film | Pression (bar) | Vitesse (m/s) | Nombre d'impacts | Résultat |
|---|---|---|---|---|
| F0 | 275 | 200 | 20 à 1000 | Perforation à 100 impacts |
| F6 | 350 | 230 | 20 à 1000 | Pas de dommage visible |
| F6' | 350 | 230 | 20 à 1000 | Pas de dommage visible |
| F5 | 350 | 230 | 20 à 1000 | Pas de dommage visible |
| F5 | 350 | 230 | 1000 à 8000 | Perforation à environ 7000 |
| F5' | 350 | 230 | 20 à 1000 | Pas de dommage visible |
| F5' | 350 | 230 | 2200 à 3000 | Perforation à environ 2800 |
| F4 | 275 | 200 | 20 à 1000 | Pas de dommage visible |
| F4 | 350 | 230 | 20 à 1000 | Pas de dommage visible |
| F4 | 350 | 230 | 1000 à 8000 | Perforation à environ 5000 |

Il ressort de ces résultats que les films adhésifs conformes à l'invention F5 et F6 présentent tous deux une capacité de résistance à l'érosion pluie largement améliorée par rapport au film F0 de l'art antérieur, y compris en présence d'un promoteur d'adhérence. Ils présentent en outre une meilleure performance que le film F4, de moindre dureté.

### B.2/ Résistance à l'érosion pluie après vieillissement

Les pièces enduites des différents films testés ont été soumises à vieillissement accéléré aux UV, dans une enceinte de vieillissement classique connue sous le nom QUV, reproduisant les dommages causés par la partie UV de la lumière solaire, la pluie et la rosée. Les pièces y ont été soumises à des cycles alternés de lumière UV et d'humidité (par condensation d'eau) à des températures élevées contrôlées, selon les paramètres suivants : temps total 1000 h (125 cycles de 4 h condensation / 4 h UVB),

Le protocole de test est conforme à celui décrit dans l'exemple B. 1/ ci-avant. Les paramètres opératoires appliqués et les résultats obtenus sont indiqués dans le tableau 4 ci-après.

**Tableau 4 - Résultats du test d'érosion pluie après vieillissement**

| Film | Pression (bar) | Vitesse (m/s) | Nombre d'impacts | Résultat |
|---|---|---|---|---|
| F0 | 275 | 200 | 20 à 1000 | Perforation à 20 impacts |
| F6' | 350 | 230 | 20 à 1000 | Pas de dommage visible |
| F6' | 350 | 230 | 6000 à 20000 | Légère rugosité à 8000 |
| F5 | 350 | 230 | 1000 à 8000 | Perforation à environ 7200 |
| F4 | 350 | 230 | 1000 à 6000 | Perforation à environ 2000 |

Il ressort de ces résultats que les films adhésifs conformes à l'invention présentent toujours, après vieillissement accéléré, une capacité de résistance à l'érosion pluie largement améliorée par rapport au film F0 de l'art antérieur. Le film conforme à l'invention F5 présente en outre une meilleure performance que le film F4, de moindre dureté.

### B.3/ Résistance à l'érosion sable

Le protocole de test est celui du Standard ASTM G76, portant sur les tests d'érosion par des particules solides.

Schématiquement, des particules solides (particules sphériques de silice de diamètre 200 µm) sont projetées par un flux d'air sur le substrat à une vitesse de 55 m/s, à une pression de 0,280 bar, avec un taux de particules de 2 g/min et un angle d'impact de pouvant varier entre 20 degrés et 90 degrés. Le taux d'érosion est déterminé à partir de la partie linéaire de la courbe de perte de poids du substrat en fonction du temps.

Le test est réalisé à 20°, pour 100 g de particules solides projetées.

Les résultats obtenus sont indiqués dans le tableau 5 ci-après.

**Tableau 5 - Résultats du test d'érosion sable**

| Film | F0 | F4 | F5 | F6 |
|---|---|---|---|---|
| Taux d'érosion (mg/g) | 0,0389 | 0,1028 | 0,0974 | 0,0597 |

Ces résultats montrent que les films conformes à l'invention F5 et F6 présentent une résistance à l'érosion sable légèrement moins bonne que celle du film F0 de l'art antérieur, mais très élevée tout de même, et meilleure que celle du film F4 de dureté Shore D inférieure à celle préconisée par la présente invention. Des résultats similaires sont obtenus après vieillissement.

Le même test a été réalisé pour 200 g de particules projetées, pour les films F5 et F4. Les résultats obtenus sont montrés respectivement sur les figures 5a et 5b. On y observe que le film F5 a bien mieux résisté à l'érosion sable que le film F4, de dureté Shore D inférieure à 50.

Au global, pour la protection combinée à l'érosion pluie et à l'érosion sable, les films conformes à l'invention sont nettement plus performants que le film de l'art antérieur F0 et le film F4.

### C/ Expérience 3

Pour cette expérience, les films adhésifs ont été testés sur une pièce de configuration simplifiée représentative d'une pièce de structure d'hélicoptère, comportant, sur une plaque d'aluminium 2024 préalablement soumise à décapage, successivement, une couche de finition époxy d'épaisseur comprise entre 15 et 25 µm et une couche de finition polyuréthane d'épaisseur comprise entre 50 et 100 µm, ainsi que, lorsque c'est précisé, une couche de promoteur d'adhérence d'épaisseur 26 µm.

Les films testés comportent une sous-couche adhésive acrylique d'épaisseur 50 µm, et une couche résistante à l'érosion d'épaisseur comprise entre 100 et 250 µm, de constitution suivante : polyuréthane thermoplastique grande dureté (polyuréthane aliphatique d'épaisseur 200 µm) de dureté Shore D 40 à 50 (bornes exclues) (Film F4, exemple comparatif) ; polyuréthane thermoplastique grande dureté (polyuréthane aliphatique d'épaisseur 200 µm) de dureté Shore D 40 à 50 (bornes exclues) avec promoteur d'adhérence (Film F4', exemple comparatif) ; polyuréthane thermoplastique grande dureté (polyuréthane aliphatique d'épaisseur 250 µm) de dureté Shore D 50 à 60 (Film F5) ; polyuréthane thermoplastique grande dureté (polyuréthane aliphatique d'épaisseur 250 µm) de dureté Shore D 50 à 60 (avec promoteur d'adhérence, Film F5') ; PEEK semi-cristallin (d'épaisseur 100 µm) de dureté Shore D 65 (Film F6) ; PEEK semi-cristallin (d'épaisseur 100 µm) de dureté Shore D 65 (avec promoteur d'adhérence, Film F6') ; PE-UHMW de dureté Shore D 50 (polymère thermoplastique semi-cristallin à très haute masse moléculaire de la famille des polyoléfines, d'épaisseur 250 µm) (Film F7) ; PE-UHMW de dureté Shore D 50 (avec promoteur d'adhérence, Film F7').

A titre d'exemple comparatif, il a en outre été testé le film F0' tel que décrit ci-avant dans l'Expérience 1 et avec promoteur d'adhérence, proposé par l'art antérieur.

### C.1/ Résistance à l'érosion pluie

Le protocole de test est conforme à celui décrit en référence à l'Expérience 2. Les paramètres opératoires appliqués et les résultats obtenus sont indiqués dans le tableau 6 ci-après.

**Tableau 6 - Résultats du test d'érosion pluie**

| Film | Pression (bar) | Vitesse (m/s) | Nombre d'impacts | Résultat |
|---|---|---|---|---|
| F0' | 275 | 200 | 20 à 1000 | Perforation à 20 impacts |
| F6' | 350 | 230 | 6000 à 20000 | Déformation plastique à partir de 6000 - pas de dommage visible |
| F4 | 350 | 230 | 20 à 7000 | Délaminage à 7000 |
| F4' | 350 | 230 | 1000 à 20000 | Déformation plastique à partir de 4000 - perforation à 15 000 |
| F7 | 350 | 230 | 20 à 8000 | Déformation plastique à partir de 20 - pas de perforation |
| F7' | 350 | 230 | 20 à 8000 | Déformation plastique à partir de 20 - pas de perforation |
| F5' | 350 | 230 | 20 à 1000 | Pas de dommage visible |
| F5' | 350 | 230 | 5200 à 6000 | Déformation plastique à partir de 5400 |

Les figures 4a et 4b montrent les pièces obtenues à l'issue du test, respectivement pour le film de l'art antérieur F0' et pour le film conforme à l'invention F6'. Sur chacune de ces pièces, chaque ligne correspond au nombre d'impacts par les particules liquides indiqué en vis-à-vis. Il apparait clairement sur ces figures que la pièce recouverte du film F0' (avec promoteur d'adhérence) est fortement endommagée à l'issue du test, pour tous les nombres d'impacts testés, alors que la pièce recouverte du film F6' (avec promoteur d'adhérence) conforme à la présente invention n'est que très peu endommagée, pour des nombres d'impacts bien supérieurs.

Il ressort de ces résultats que les films adhésifs F7, et F5', F6' et F7' conformes à l'invention présentent tous une bien meilleure résistance à l'érosion pluie que le film F0' de l'art antérieur.

### C.2/ Résistance à l'érosion sable

Le protocole de test est conforme à celui décrit en référence à l'Expérience 2.

Le test est réalisé à 20°, pour 100 g de particules solides projetées.

Les résultats obtenus sont indiqués dans le tableau 7 ci-après.

**Tableau 7 - Résultats du test d'érosion sable**

| Film | F0' | F6' | F4 | F4' | F7 | F7' |
|---|---|---|---|---|---|---|
| Taux d'érosion (mg/g) | 0,0282 | 0,0417 | 0,099 | 0,10525 | 0,1023 | 0,09815 |

Ces résultats montrent que les films conformes à l'invention F6', F7 et F7' présentent une résistance à l'érosion sable légèrement moins bonne que celle du film F0' (avec promoteur d'adhérence) de l'art antérieur, mais très élevée tout de même.

Au global, pour la protection combinée à l'érosion pluie et à l'érosion sable, on constate là encore que les films conformes à l'invention sont nettement plus performants que le film proposé par l'art antérieur, ainsi que les films F4 et F4' dont la dureté Shore D est inférieure à 50.

### Test de cohésion

Un test de cohésion a été réalisé par application du Film F6 selon l'invention, ou du film F0 de l'art antérieur, sur des pièces recouvertes d'un primaire peinture.

Les pièces ont été soumises à un test de vieillissement à 75 °C pendant 20 h, puis pelage à 180 degrés à 100 mm/min.

Les résultats sont montrés dans le tableau 8 ci-après.

**Tableau 8 - Résultats du test de cohésion**

| Film testé | Force de traction mesurée | Observation |
|---|---|---|
| Film F0 | 15 N/cm | Mesure non conforme due à l'élongation - 100 % de délaminage de l'adhésif |
| Film F6 | 20,7 N/cm | 100 % de pelage de l'adhésif |

On observe que le Film F0 selon l'invention présente un délaminage de l'adhésif (« Cohesive Failure ») pour une force de 15 N/cm, tandis que le Film F6 conforme à l'invention ne se délamine pas à 20 N/cm. Il est seulement observé un pelage du film de son adhésif (« Adhesive Failure »).

Le pouvoir adhésif du PEEK de dureté Shore D 65 choisi conformément à la présente invention, mesuré selon la norme ISO 8510-2, correspond en outre à une charge moyenne par largeur de 11,61 (N/cm), pour seulement 8,19 N/cm pour le TPU de l'art antérieur, de dureté Shore D 35.

## Revendications

1. Pièce (20) d'aéronef comprenant un film thermoformable multicouches (10) pour la protection de la surface de ladite pièce (20) d'aéronef, ledit film comportant :
- une sous-couche d'un matériau adhésif (11), dite sous-couche adhésive, apte à adhérer à la surface de ladite pièce (20) par une première face (111),
- et au moins une couche en matériau polymère (12) fixée sur une deuxième face (112) de ladite sous-couche adhésive (11) opposée à ladite première face (111), et résistante à l'érosion par des particules solides et à l'érosion par des particules liquides,
la couche en matériau polymère (12) résistante à l'érosion par des particules solides et à l'érosion par des particules liquides étant formée en un matériau polymère choisi parmi un polyuréthane, une polyétheréthercétone et un polyéthylène à poids moléculaire très élevé, ledit matériau polymère étant de dureté Shore D comprise entre 50 et 65 D
**caractérisé en ce que** la couche en matériau polymère (12) résistante à l'érosion par des particules solides et à l'érosion par des particules liquides et la sous-couche adhésive (11) sont appliquées sur la surface extérieure de ladite pièce (20) d'aéronef.

2. Pièce (20) d'aéronef selon la revendication 1, dans laquelle la couche en matériau polymère (12) résistante à l'érosion par des particules solides et à l'érosion par des particules liquides présente une épaisseur comprise entre 50 et 500 µm.

3. Pièce (20) d'aéronef selon l'une quelconque des revendications 1 à 2, dans laquelle la couche en matériau polymère (12) résistante à l'érosion par des particules solides et à l'érosion par des particules liquides est fonctionnalisée en surface.

4. Pièce (20) d'aéronef selon l'une quelconque des revendications 1 à 3, comportant au moins une couche fonctionnelle en matériau polymère (15, 15') présentant une fonction antigivre et/ou de résistance à l'encrassement, ladite couche fonctionnelle (15, 15') étant superposée et/ou juxtaposée, sur la sous-couche adhésive (11), à la couche en matériau polymère (12) résistante à l'érosion par des particules solides et à l'érosion par des particules liquides.

5. Pièce (20) d'aéronef selon l'une quelconque des revendications 1 à 4, comportant au moins une couche en matériau polymère (16, 16') présentant une structuration de surface limitant la traînée de frottement dans l'air, superposée et/ou juxtaposée, sur la sous-couche adhésive (11), à la couche en matériau polymère (12) résistante à l'érosion par des particules solides et à l'érosion par des particules liquides.

6. Pièce (20) d'aéronef selon l'une quelconque des revendications 1 à 5, dont les couches constitutives juxtaposées et/ou superposées les unes aux autres sont assemblées les unes aux autres par adhésif.

7. Pièce (20) d'aéronef selon l'une quelconque des revendications 1 à 5, dont les couches constitutives juxtaposées et/ou superposées les unes aux autres sont thermosoudées les unes aux autres.

8. Pièce (20) d'aéronef selon l'une quelconque des revendications 1 à 5, dont les couches constitutives juxtaposées et/ou superposées les unes aux autres sont coextrudées.

9. Pièce (20) d'aéronef selon l'une quelconque des revendications 1 à 8, dans laquelle la sous-couche adhésive (11) est constituée d'un matériau adhésif du type sensible à la pression.

10. Pièce (20) d'aéronef selon la revendication 9, dans laquelle ledit matériau adhésif du type sensible à la pression est choisi parmi les matériaux acryliques, le caoutchouc et la silicone.

11. Pièce (20) d'aéronef selon l'une quelconque des revendications 1 à 10, dans laquelle la sous-couche adhésive (11) présente une épaisseur comprise entre 25 et 100 µm.

12. Procédé pour la protection de surface d'une pièce (20), notamment la surface extérieure d'une pièce d'aéronef, **caractérisé en ce qu'**il comprend les étapes de :
- thermoformage d'un film (10) selon l'une quelconque des revendications 1 à 11 selon une forme apte à épouser la forme d'au moins une partie de ladite pièce (20),
- et application dudit film (10) sur la surface extérieure de ladite partie de la pièce (20).

## Patentansprüche

1. Flugzeugteil (20), das eine warmformbare Mehrschichtfolie (10) zum Schutz der Oberfläche des Flugzeugteils (20) aufweist, wobei die Folie Folgendes aufweist:
- eine Unterschicht aus einem klebenden Material (11), die als Klebe-Unterschicht bezeichnet wird und geeignet ist, über eine erste Seite (111) an der Oberfläche des Flugzeugteils (20) zu haften,
- und mindestens eine Schicht aus Polymermaterial (12), die an einer zweiten Seite (112) der Klebe-Unterschicht (11) gegenüber der ersten Seite (111) befestigt ist und beständig gegenüber der Erosion durch feste Teilchen und der Erosion durch flüssige Teilchen ist, wobei die gegenüber der Erosion durch feste Teilchen und der Erosion durch flüssige Teilchen beständige Schicht aus Polymermaterial (12) aus einem Polymermaterial gebildet wird, das aus einem Polyurethan, einem Polyetheretherketon oder einem Polyethylen mit sehr hohem Molekulargewicht ausgewählt ist, wobei das Polymermaterial eine Shore D-Härte zwischen 50 und 65 D aufweist,
**dadurch gekennzeichnet, dass** die gegenüber der Erosion durch feste Teilchen und der Erosion durch flüssige Teilchen beständige Schicht aus Polymermaterial (12) und die Klebe-Unterschicht (11) auf die Außenfläche des Flugzeugteils (20) aufgetragen sind.

2. Flugzeugteil (20) nach Anspruch 1, wobei die gegenüber der Erosion durch feste Teilchen und der Erosion durch flüssige Teilchen beständige Schicht aus Polymermaterial (12) eine Dicke zwischen 50 und 500 µm aufweist.

3. Flugzeugteil (20) nach einem der eine Ansprüche 1 bis 2, wobei die gegenüber der Erosion durch feste Teilchen und der Erosion durch flüssige Teilchen beständige Schicht aus Polymermaterial (12) oberflächenfunktionalisiert ist.

4. Flugzeugteil (20) nach einem der eine Ansprüche 1 bis 3, das mindestens eine Funktionsschicht aus Polymermaterial (15, 15') aufweist, die eine Funktion zum Vereisungsschutz und/oder zur Beständigkeit gegenüber Verschmutzungen aufweist, wobei die Funktionsschicht (15, 15') auf der Klebe-Unterschicht (11) der gegenüber der Erosion durch feste Teilchen und der Erosion durch flüssige Teilchen beständigen Schicht aus Polymermaterial (12) überlagert ist und/oder neben dieser anliegt.

5. Flugzeugteil (20) nach einem der eine Ansprüche 1 bis 4, das mindestens eine Schicht aus Polymermaterial (16, 16') aufweist, die eine Oberflächenstruktur aufweist, die den Reibungswiderstand in Luft begrenzt und auf der Klebe-Unterschicht (11) der gegenüber der Erosion durch feste Teilchen und der Erosion durch flüssige Teilchen beständigen Schicht aus Polymermaterial (12) überlagert ist und/oder neben dieser anliegt.

6. Flugzeugteil (20) nach einem der eine Ansprüche 1 bis 5, wobei die überlagerten und/oder nebeneinander anliegenden Teilschichten durch Klebstoff miteinander verbunden sind.

7. Flugzeugteil (20) nach einem der eine Ansprüche 1 bis 5, wobei die überlagerten und/oder nebeneinander anliegenden Teilschichten durch Heißverschweißung miteinander verbunden sind.

8. Flugzeugteil (20) nach einem der eine Ansprüche 1 bis 5, wobei die überlagerten und/oder nebeneinander anliegenden Teilschichten durch Coextrusion miteinander verbunden sind.

9. Flugzeugteil (20) nach einem der eine Ansprüche 1 bis 8, wobei die Klebe-Unterschicht (11) aus einem druckempfindlichen klebenden Material gebildet wird.

10. Flugzeugteil (20) nach Anspruch 9, wobei das druckempfindliche klebende Material aus einem der folgenden Materialien ausgewählt ist: Acryl, Gummi oder Silikon.

11. Flugzeugteil (20) nach einem der eine Ansprüche 1 bis 10, wobei die Klebe-Unterschicht (11) eine Dicke zwischen 25 und 100 µm aufweist.

12. Verfahren zum Schutz der Oberfläche eines Teils (20), insbesondere der Außenfläche eines Flugzeugteils, **dadurch gekennzeichnet, dass** es die folgenden Schritte aufweist:
- Warmformen einer Folie (10) nach einem der Ansprüche 1 bis 11 in eine Form, die geeignet ist, sich vollständig an die Form von mindestens einem Bereich des Teils (20) anzupassen,
- und Aufbringen der Folie (10) auf die Außenfläche des Bereichs des Teils (20).

## Claims

1. Aircraft component (20) comprising a multilayer thermoformable film (10) for protecting the surface of said aircraft component (20), said film comprising:
- a sublayer of an adhesive material (11), referred to as the adhesive sublayer, able to adhere to the surface of said component (20) via a first face (111),
- and at least one layer of polymer material (12) attached to a second face (112) of said adhesive sublayer (11) which is the opposite face to said first face (111) and which is resistant to erosion by solid particles and to erosion by liquid particles,
the layer of polymer material (12) resistant to erosion by solid particles and to erosion by liquid particles being formed of a polymer material selected from a polyurethane, a polyether ether ketone and a very high molecular weight polyethylene, said polymer material having a Shore D hardness comprised between 50 and 65 D **characterized in that** the layer of polymer material (12) resistant to erosion by solid particles and to erosion by liquid particles and the adhesive sublayer (11) are applied to the exterior surface of said aircraft component (20).

2. Aircraft component (20) according to Claim 1, in which the layer of polymer material (12) resistant to erosion by solid particles and to erosion by liquid particles has a thickness comprised between 50 and 500 µm.

3. Aircraft component (20) according to either one of Claims 1 and 2, wherein the layer of polymer material (12) resistant to erosion by solid particles and to erosion by liquid particles is functionalized at its surface.

4. Aircraft component (20) according to any one of Claims 1 to 3, comprising at least one functional layer of polymer material (15, 15') exhibiting an anti-icing and/or fouling-resistant function, said functional layer (15, 15') being superposed and/or juxtaposed, on the adhesive sublayer (11), with the layer of polymer material (12) resistant to erosion by solid particles and to erosion by liquid particles.

5. Aircraft component (20) according to any one of Claims 1 to 4, comprising at least one layer of polymer material (16, 16') exhibiting a surface structuring that limits the drag of friction through the air, which is superposed and/or juxtaposed, on the adhesive sublayer (11), with the layer of polymer material (12) resistant to erosion by solid particles and to erosion by liquid particles.

6. Aircraft component (20) according to any one of Claims 1 to 5, of which the constituent layers that are juxtaposed and/or superposed with one another are assembled with one another using adhesive.

7. Aircraft component (20) according to any one of Claims 1 to 5, of which the constituent layers that are juxtaposed and/or superposed with one another are thermally bonded to one another.

8. Aircraft component (20) according to any one of Claims 1 to 5, of which the constituent layers that are juxtaposed and/or superposed with one another are coextruded.

9. Aircraft component (20) according to any one of Claims 1 to 8, wherein the adhesive sublayer (11) is made of an adhesive material of the pressure-sensitive adhesive type.

10. Aircraft component (20) according to Claim 9, wherein said adhesive material of the pressure-sensitive adhesive type is selected from acrylic materials, rubber and silicone.

11. Aircraft component (20) according to any one of Claims 1 to 10, in which the adhesive sublayer (11) has a thickness comprised between 25 and 100 µm.

12. Method for protecting the surface of a component (20), notably the exterior surface of an aircraft component, **characterized in that** it comprises the steps of:
- thermoforming a film (10) according to any one of Claims 1 to 11 in a shape able to conform to the shape of at least part of said component (20),
- and applying said film (10) to the exterior surface of said part of the component (20).
